# EUROPEAN PATENT APPLICATION

(11) **EP 1 918 824 A1**
(43) Date of publication of application: **07.05.2008**
(21) Application number: 07119508.5
(22) Date of filing: 29.10.2007
(51) Int. Cl.: G06F 17/00

(54) **Method for communication by binary coding of XML files**

(30) Priority: 03.11.2006 FR 0654709
(71) Applicant: Alcatel Lucent, 75008 Paris (FR)
(72) Inventor: Trefcon, Michel, 35250 SAINT SULPICE LA FORET (FR); Pulrulczyk, Cedric, 27400 ACQUIGNY (FR); Sarremejean, Xavier, 95490 VAUREAL (FR)
(74) Representative: Hedarchet, Stéphane

(57) **Abstract**

Method for communication of information between a content server (1) and a mobile terminal (2) wherein the terminal (2) sends a request to said server (1) and said server (1) responds to said request by sending information in the form of an XML file, (3) and a linked content (4), wherein said method provides for binary mapping of the XML file (3) and for concatenating the linked content (4) before they are sent

## Description

The invention concerns a method for communication of information between a content server and a mobile terminal, and also a content server.

The invention applies in particular to the communication of information intended to be displayed on a mobile telephone, in particular in the context of a televisual information service featuring an interactive multimedia content.

To provide this type of communication, it has been proposed to use the extensible Markup Language (XML) as a data container. XML is a well-defined protocol that is widely used for tasks such as those necessary to display televisual contents on mobile telephones. Using XML is an appropriate solution if the client terminal is connected to a broadband network and has unlimited CPU (Central Processor Unit) computation power.

However, because of limitations in the system environment of the service that the client uses, the advantages of XML are impacted by the performance constraints necessary for processing XML data.

There is therefore a requirement to develop a communication method that minimizes the necessary bandwidth, limits the number of round trips between the mobile terminal and the server and use of the CPU of the mobile terminal.

In an attempt to satisfy these constraints, it has been proposed to compress the XML data using an algorithm enabling recovery thereof in the mobile terminal.

However, although data compression limits the bandwidth, recovering the data represents too great a load on the CPU relative to the capacity of the mobile terminal. As for the use of rich media, this necessitates the addition of a description layer that it is not always necessary to be able to benefit from.

An object of the invention is to alleviate the problems of the prior art, in particular by proposing a method for communication of information between a server and a mobile terminal that optimizes the bandwidth necessary for the transfer and the use of the CPU of the mobile terminal.

To this end, a first aspect of the invention proposes a method for communication of information between a content server and a mobile terminal wherein the terminal sends a request to said server and said server responds to said request by sending information in the form of an XML file and a linked content, wherein said method provides for binary mapping of the XML file and for concatenating the linked content before they are sent.

A second aspect of the invention proposes a server for communication of information to a mobile terminal, said server comprising means for binary mapping of XML files and means for concatenating a linked content, said server further comprising means for simultaneous transmission of the mapped XML files and the concatenated contents.

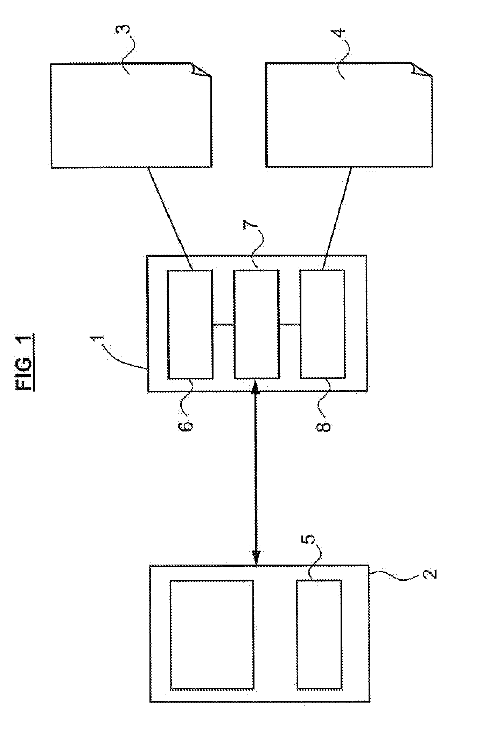

Other features and advantages of the invention will appear in the following description of particular embodiments, with reference to the appended drawing, which shows a server connected to a mobile terminal.

The invention concerns a method for communication of information between a content server 1 and a mobile terminal 2, In particular, the server 1 is adapted to communicate information that is intended for a mobile telephone, in particular for the televisual display of an interactive multimedia content.

To this end, the terminal 2 sends a request to said server 1 and said server 1 responds to said request by sending the information, The information communicated is advantageously in the form of an XML 3 file and a linked content 4.

In one particular embodiment, communication between the server 1 and the mobile terminal 2 is effected in accordance with an HTTP protocol.

To limit the bandwidth requirements and the use of the CPU of the mobile terminal 2, the invention provides for binary mapping of the XML file 3 and concatenating the linked content 4 before they are sent.

In one embodiment, the binary mapping is effected by coding conforming to the Little Endian convention to enable fast decompression of the data by the mobile terminal 2, in particular using an ARM processor 5.

Furthermore, the linked content 4 can take the form of multimedia files sent simultaneously with the mapped XML file 3 without leaving the links to the multimedia files.

An embodiment of the method is described hereinafter in which the mapping rules include the definition of the following three types of elements :
- a sequence that is a composition of any type of elements;
- a series that is a composition of elements of the same type;
- an attribute that is not a composition.

With this definition, it is possible to effect the mapping with a format differentiated as a function of the types of elements to be mapped, in particular as detailed hereinafter,

### Coding format for "composition" types

| Type of elements (UINT32) 0x00000001=Sequence 0x00000002=Series | Type (UINT32) | Number of elements (UINT32) | Total size (UINT32) |
|---|---|---|---|
| Number of rank 1 UINT32 | Size of the element (UINT32) | | |
| Data of the element 1 (variable length) | | | |

| Number of rank UINT32 | Size of the element (UINT32) |
|---|---|
| Data of the element (variable length) | |

| Number of rank N UINT32 | Size of the element (UINT32) |
|---|---|
| Data of the element N (variable length) | |

### Coding format for the attributes

| | | | |
|---|---|---|---|
| Type of elements (UINT32) 0x00000003=attribute | Type (UINT32) | Size (UINT32) | Value (variable length) |

If an attribute is optional, its size can be set at 0 and the value field can be either not present or not communicated.

In this embodiment, the types of elements can basically be as follows:

| **Data type** | **Format** | **Comments** |
|---|---|---|
| Boolean | Uint 32 bits | 0x00000000 = true or false Little-endian coding |
| Uint32 | Uint 32 bits | Little-endian coding the value 0x12345678 is coded 0x78563412 |
| Time date | YYYY-MM-DOTHH:MM:SSZ (ISO 8601) Y, M, D, H, M, S are numbers | 2005-11-07T20:30:45Z means 2005, 7 November, 20 hours, 30 minutes and 45 seconds, local time |
| Duration | DDD:HH:MM D, H and M are numbers | 20:01:30 means 20 days, 1 hour and 32 minutes |
| Image | Binary image data in png format | The content is taken as it stands, without coding |
| Character string | UTF-16LE charset | Does not terminate with the null character (null terminated). The size is meaningful |
| URL | Character string | |

Moreover, in relation to the description given hereinabove, the invention also concerns the content server 1 for the communication of information to a mobile terminal 2, said server comprising means 6 for binary mapping of XML files 3 and means 7 for concatenating a linked content 4, said server 1 further comprising means 8 for simultaneous transmission of mapped XML files 3 and concatenated contents 4.

## Claims

1. Method for communication of information between a content server (1) and a mobile terminal (2) wherein the terminal (2) sends a request to said server (1) and said server (1) responds to said request by sending information in the form of an XML file (3) and a linked content (4), wherein said method provides for binary mapping of the XML (3) file and for concatenating the linked content (4) before they are sent.

2. Communication method according to claim 1, wherein the binary mapping is effected by coding in accordance with the Little Endian convention.

3. Communication method according to claim 1 or 2, wherein the linked content (4) takes the form of multimedia files, said files being sent simultaneously with the mapped XML (3) file without leaving the links to the multimedia files.

4. Communication method according to claim 3, wherein the information communicated is for the televisual display of an interactive multimedia content.

5. Communication method according to any one of claims, 1 to 4, wherein communication between the server (1) and the mobile terminal (2) is effected in accordance with an HTTP protocol.

6. Communication method according to any one of claims 1 to 5, wherein the mapping rules comprise the definition of the following three types of elements.
- a sequence that is a composition of any type of elements;
- a series that is a composition of elements of the same type;
- an attribute that is not a composition;
and wherein the mapping is effected with a format differentiated as a function of the types of elements to be mapped.

7. Content server (1) for the communication of information to a mobile terminal (2), said server (1) comprising means (6) for binary mapping of XML files and means (7) for concatenating a linked content (4), said server (1) further comprising means (8) for simultaneous transmission of the mapped XML (3) files and the concatenated contents (4).
